# EUROPÄISCHE PATENTSCHRIFT

(11) **EP 1 950 508 B1**
(45) Veröffentlichungstag und Bekanntmachung des Hinweises auf die Patenterteilung: **10.07.2013**
(21) Anmeldenummer: 07020968.9
(22) Anmeldetag: 26.10.2007
(51) Int. Cl.: F24F 11/047, G05D 7/06

(54) **Volumenstromregler**
Volume flow regulator
Régulateur de débit

(30) Priorität: 29.01.2007 DE 202007001507 U
(43) Veröffentlichungstag der Anmeldung: 30.07.2008
(73) Patentinhaber: Gruner AG, 78564 Wehingen (DE)
(72) Erfinder: Spreitzer, Wolfgang, Dr., 78564 Wehingen (DE)
(74) Vertreter: Kohler Schmid Möbus

(56) Entgegenhaltungen:
- EP-A1- 0 721 088
- DE-A1- 2 542 160
- DE-U1-202004 010 819
- GB-A- 2 238 885
- US-A- 4 553 696

## Beschreibung

Die vorliegende Erfindung betrifft einen Volumenstromregler, insbesondere für klima- und lüftungstechnische Anlagen, zum Verstellen einer Regelklappe, die im Inneren eines Strömungskanals schwenkbar gelagert ist, wobei der Volumenstromregler einen Differenzdrucksensor zum Messen eines im Strömungskanal herrschenden Differenzdrucks, eine Regeleinheit, die die Regelklappe in Abhängigkeit des vom Drucksensor gemessenen Drucks zum Einstellen eines Soll-Volumenstroms im Strömungskanal verstellt, und Mittel zum Einstellen von Regelparametern umfasst.

Ein derartiger Volumenstromregler ist beispielsweise durch die DE 20 2004 010 819 U1 bekannt geworden.

Solche Volumenstromregler dienen zum Einstellen eines Volumenstroms durch einen Strömungskanal in klima- und lüftungstechnischen Anlagen. Über einen Druckdifferenzsensor wird im Strömungskanal eine Druckdifferenz bestimmt und hieraus ein Istwert ermittelt. Dieser wird in einer Regeleinrichtung mit einem hinterlegten Sollwert verglichen. Im Falle einer Abweichung verstellt die Regeleinrichtung eine im Strömungskanal vorgesehene Regelklappe, um so den Volumenstrom zwischen einem minimal und einem maximal zulässigen Volumenstrom entsprechend einzustellen.

Bei dem aus DE 20 2004 010 819 U1 bekannten Volumenstromregler sind zur Einstellung des minimal und maximal zulässigen Volumenstroms zwei Potentiometer vorgesehen. Durch eine außenseitig aufgebrachte Skalierung können der minimale und der maximale Volumenstrom über je ein Potentiometer problemlos eingestellt werden. Die Eingabe weiterer Regelparameter (z.B. "maximaler Messbereich", normale oder inverse Drehrichtung der Regelklappe, etc.) und die Visualisierung der Stellantriebsdaten erfolgen mit einem separaten Bedienteil, das an den Volumenstromregler angeschlossen wird.

Demgegenüber ist es die Aufgabe der vorliegenden Erfindung, bei einem Volumenstromregler der eingangs genannten Art die Bedienung zu vereinfachen.

Diese Aufgabe wird erfindungsgemäß dadurch gelöst, dass die Mittel einen ersten Schalter zum Auswählen eines von mehreren Regelparametern und einen zweiten Schalter zum Einstellen des Wertes des jeweils ausgewählten Parameters aufweisen.

Durch Verstellen des ersten Schalters (Parameterschalter) wird z.B. mithilfe einer außenseitig aufgebrachten Skala ein gewünschter Regelparameter ausgewählt, dessen Wert dann mit dem zweiten Schalter (Einstellpotentiometer oder Editschalter) verstellt wird. Bevorzugt sind die beiden Schalter jeweils Drehschalter oder -knöpfe mit einer auf die Gehäuseaußenseite aufgebrachten Skala für die verschiedenen Regelparameter und Einstellwerte.
Regelparameter können beispielsweise sein:
- Vₘᵢₙ:: minimal zulässiger Volumenstrom in % bezogen auf Vₙₒₘ
- Vₘₐₓ:: maximal zulässiger Volumenstrom in % bezogen auf Vₙₒₘ
- Vₙₒₘ:: maximaler Messbereich / OEM-spezifischer Wert, entsprechend dem verwendeten VAV-Boxtyp
- Mode:: Betriebsart: 0...10V; 2...10V; normale oder inverse Drehrichtung der Regelklappe
- Active Flow:: aktueller Volumenstrom in % bezogen auf Vₙₒₘ

Besonders bevorzugt ist ein Display zum Anzeigen des aktuell eingestellten Wertes des mit dem ersten Schalter ausgewählten Regelparameters vorgesehen. Die Editierung erfolgt durch Verstellen des zweiten Schalters aus seiner aktuellen Stellung.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung. Es zeigt:
- Fig. 1: die Draufsicht des erfindungsgemäßen Volumenstromreglers; und
- Fig. 2: schematisch das Innenleben des Volumenstromreglers von Fig. 1.

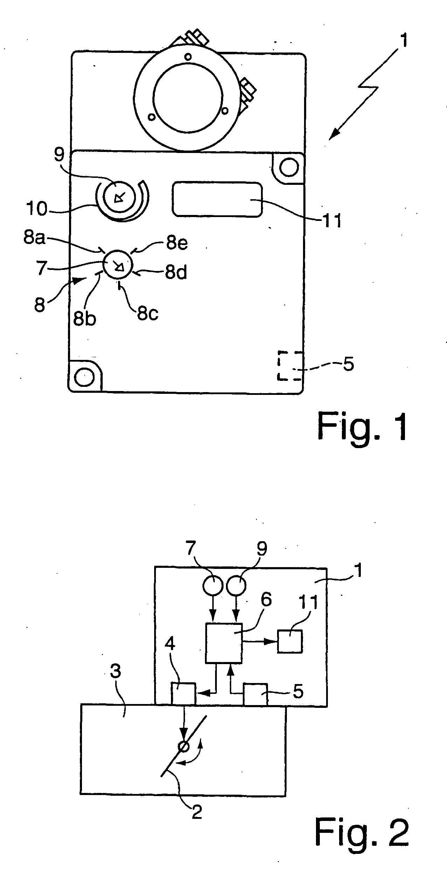

Der in **Fign. 1 und 2** gezeigte Volumenstromregler **1** dient zum Einstellen eines Volumenstroms in klima- und lüftungstechnischen Anlagen, mittels einer Regelklappe **2,** die im Inneren eines Strömungskanals **3** schwenkbar gelagert ist.

Dazu umfasst der Volumenstromregler 1 einen Stellantrieb **4** zum Verschwenken der Regelklappe 2, einen Differenzdrucksensor **5** zum Messen eines im Strömungskanal 3 herrschenden Differenzdrucks, eine Regeleinheit **6,** die den Stellantrieb 4 in Abhängigkeit des vom Differenzdrucksensor 5 gemessenen Drucks zum Einstellen eines in der Regeleinheit 6 hinterlegten Soll-Differenzdrucks, d.h. eines Soll-Volumenstroms, im Strömungskanal 3 verstellt.

Weiterhin weist der Volumenstromregler 1 einen ersten Drehschalter (Parameterschalter) **7** zum Auswählen eines von mehreren Regelparametern **8a-8e** der Regeleinheit 6 und einen zweiten Drehschalter (Einstellpotentiometer) **9** zum Einstellen des Wertes des jeweils ausgewählten Regelparameters auf. Die Regelparameter 8a-8e sind im gezeigten Ausführungsbeispiel: Vₘᵢₙ, Vₘₐₓ, Vₙₒₘ, Mode und Active Flow. Auf der Gehäuseaußenseite sind eine Skala **8** mit den Regelparametern 8a-8e und eine Skala **10** aufgebracht, welche die Drehrichtung des Einstellpotentiometers 9 für eine Zunahme bzw. Abnahme anzeigt. Außerdem ist noch ein Display **11** zum Anzeigen des aktuell eingestellten Wertes des mit dem Parameterschalter 7 ausgewählten Regelparameters vorgesehen.

Durch Verstellen des Parameterschalters 7 wird mithilfe der Skala 8 ein gewünschter Regelparameter ausgewählt, dessen Wert auf dem Display angezeigt wird und durch Verdrehen des Einstellpotentiometers 9 verändert werden kann. Die Werteübernahme in die Regeleinheit 6 erfolgt durch Weiterschalten zu einem neuen Regelparameter innerhalb von 10 s. Erfolgt keine Werteübernahme, wird nach 10 s wieder der aktuell gültige Wert im Display 11 angezeigt.

## Patentansprüche

1. Volumenstromregler (1), insbesondere für klima- und lüftungstechnische Anlagen, zum Verstellen einer Regelklappe (2), die im Inneren eines Strömungskanals (3) schwenkbar gelagert ist, umfassend:
einen Differenzdrucksensor (5) zum Messen eines im Strömungskanal (3) herrschenden Differenzdrucks,
eine Regeleinheit (6), die die Regelklappe (2) in Abhängigkeit des vom Drucksensor (5) gemessenen Drucks zum Einstellen eines Soll-Volumenstroms im Strömungskanal (3) verstellt,
und Mittel zum Einstellen von Regelparametern,
**dadurch gekennzeichnet,**
**dass** die Mittel einen ersten Schalter (7) zum Auswählen eines von mehreren Regelparametern (8a-8e) und einen zweiten Schalter (9) zum Einstellen des Wertes des jeweils ausgewählten Regelparameters aufweisen.

2. Volumenstromregler nach Anspruch 1, **dadurch gekennzeichnet, dass** die Regelparameter (8a-8e) "minimal zulässiger Volumenstrom" und/oder "maximal zulässiger Volumenstrom" und/oder "maximaler Messbereich" und/oder "Betriebsartmodus" und/oder "Active Flow" sind.

3. Volumenstromregler nach Anspruch 1 oder 2, **dadurch gekennzeichnet, dass** der erste Schalter (7) und/oder der zweite Schalter (9) jeweils Drehschalter oder -knöpfe sind.

4. Volumenstromregler nach einem der vorhergehenden Ansprüche, **dadurch gekennzeichnet, dass** dem ersten Schalter (7) eine Skala (8) mit den auswählbaren Regelparametern (8a-8e) zugeordnet ist.

5. Volumenstromregler nach einem der vorhergehenden Ansprüche, **dadurch gekennzeichnet, dass** dem zweiten Schalter (9) eine Skala (10), welche die Schaltrichtung des zweiten Schalters (9) für eine Wertzunahme bzw. Wertabnahme anzeigt, zugeordnet ist.

6. Volumenstromregler nach einem der vorhergehenden Ansprüche, **dadurch gekennzeichnet, dass** ein Display (11) zum Anzeigen des aktuell eingestellten Wertes des mit dem ersten Schalter (7) jeweils ausgewählten Regelparameters vorgesehen ist.

7. Volumenstromregler nach einem der vorhergehenden Ansprüche, **dadurch gekennzeichnet, dass** der Volumenstromregler (1) einen Stellantrieb (4) zum Verschwenken der Regelklappe (2) aufweist.

## Claims

1. Volume flow regulator (1), in particular, for air conditioning systems and ventilation systems, for adjusting a butterfly valve (2) that is pivotably disposed inside a flow channel (3), comprising:
a differential pressure sensor (5) for measuring a differential pressure that prevails in the flow channel (3),
a control unit (6) that adjusts the butterfly valve (2) in dependence on the pressure measured by the pressure sensor (5) for adjusting a desired volume flow in the flow channel (3),
and means for adjusting control parameters,
**characterized in that** the means comprise a first switch (7) for selecting one of a plurality of control parameters (8a-8e), and a second switch (9) for adjusting the value of the respectively selected control parameter.

2. Volume flow regulator according to claim 1, **characterized in that** the control parameters (8a-8e) are: "minimum admissible volume flow" and/or "maximum admissible volume flow" and/or "maximum measuring range" and/or "operating mode" and/or "active flow".

3. Volume flow regulator according to claim 1 or 2, **characterized in that** each of the first switch (7) and/or the second switch (9) is a rotary switch or rotary knob.

4. Volume flow regulator according to any one of the preceding claims, **characterized in that** the first switch (7) is associated with a scale (8) with the control parameters (8a-8e) that can be selected.

5. Volume flow regulator according to any one of the preceding claims, **characterized in that** the second switch (9) is associated with a scale (10) that displays the switching direction of the second switch (9) as to whether the value increases or decreases.

6. Volume flow regulator according to any one of the preceding claims, **characterized in that** a display (11) is provided for displaying the instantaneously adjusted value of each control parameter selected by means of the first switch (7).

7. Volume flow regulator according to any one of the preceding claims, **characterized in that** the volume flow regulator (1) comprises an actuator (4) for pivoting the butterfly valve (2).

## Revendications

1. Régulateur de débit (1), en particulier pour installations de climatisation et de ventilation, destiné à régler un volet de régulation (2) qui est monté pivotant à l'intérieur d'un canal d'écoulement (3), comprenant :
un capteur de pression différentielle (5) pour mesurer une pression différentielle régnant dans le canal d'écoulement (3),
une unité de régulation (6) qui règle le volet de régulation (2) en fonction de la pression mesurée par le capteur de pression (5) afin de régler un débit volumique de consigne dans le canal d'écoulement (3),
et des moyens pour régler des paramètres de régulation,
**caractérisé en ce**
**que** les moyens présentent un premier commutateur (7) pour sélectionner un parmi plusieurs paramètres de régulation (8a-8e) et un deuxième commutateur (9) pour régler la valeur du paramètre de régulation sélectionné.

2. Régulateur de débit selon la revendication 1, **caractérisé en ce que** les paramètres de régulation (8a-8e) sont : « débit volumique minimum admissible » et/ou « débit volumique maximum admissible » et/ou « plage de mesure maximum » et/ou « mode de fonctionnement » et/ou « débit actif ».

3. Régulateur de débit selon la revendication 1 ou 2, **caractérisé en ce que** le premier commutateur (7) et/ou le deuxième commutateur (9) sont des commutateurs ou des boutons rotatifs.

4. Régulateur de débit selon une des revendications précédentes, **caractérisé en ce qu'**une échelle (8) avec les paramètres de régulation (8a-8e) sélectionnables est associée au premier commutateur (7).

5. Régulateur de débit selon une des revendications précédentes, **caractérisé en ce qu'**une échelle (10) qui indique la direction de commutation du deuxième commutateur (9) pour une augmentation de valeur ou une diminution de valeur est associée au deuxième commutateur (9).

6. Régulateur de débit selon une des revendications précédentes, **caractérisé en ce qu'**un écran (11) pour afficher la valeur actuellement réglée du paramètre de régulation sélectionné avec le premier commutateur (7) est prévu.

7. Régulateur de débit selon une des revendications précédentes, **caractérisé en ce que** le régulateur de débit (1) présente un actionneur de positionnement (4) pour faire pivoter le volet de régulation (2).
